## Europäisches Patentamt

## European Patent Office

## Office européen des brevets

(11) Veröffentlichungsnummer : **0 038 057**
**B1**

(12)

# EUROPÄISCHE PATENTSCHRIFT

(45) Veröffentlichungstag der Patentschrift :
22.06.83

(21) Anmeldenummer : 81102799.4

(22) Anmeldetag : 11.04.81

(51) Int. Cl.³ : **F 02 F 1/00, F 16 J 10/04**

(54) **Zylinderlaufbüchse.**

(30) Priorität : 14.04.80 US 139984

(43) Veröffentlichungstag der Anmeldung :
21.10.81 Patentblatt 81/42

(45) Bekanntmachung des Hinweises auf die Patenterteilung : 22.06.83 Patentblatt 83/25

(84) Benannte Vertragsstaaten :
AT BE CH DE FR GB IT LI SE

(56) Entgegenhaltungen :
DE B 1 022 600
DE C 1 028 386
FR A 609 917
MTZ MOTORTECHNISCHE ZEITSCHRIFT,
Band 38, Nr. 4, April 1977, Stuttgart E. HOEPKE
« Abdichtung nasser Zylinderlaufbuchsen von
Dieselmotoren mittels O-Ringen » Seiten 149 bis
152

(73) Patentinhaber : DEERE & COMPANY
1 John Deere Road
Moline Illinois 61265 (US)

(72) Erfinder : Hauser, Herbert Joseph, Jr.
410 Mitchell
Waterloo Iowa 50702 (US)

(74) Vertreter : Lins, Edgar, Dipl.-Phys. et al
Patentanwälte Gramm + Lins Theodor-Heuss-Strasse 2
D-3300 Braunschweig (DE)

EP 0 038 057 B1

## Zylinderlaufbüchse

Die Erfindung betrifft eine Zylinderlaufbüchse, bestehend aus einer länglichen, an beiden Enden offenen zylindrischen Hülse, die eine glatte Innenwandung mit überall angenähert gleichem Durchmesser sowie eine profilierte äußere Mantelfläche aufweist.

Die Erfindung betrifft ferner eine mit einer derartigen Zylinderlaufbüchse ausgestattete Brennkraftmaschine.

Zylinderlaufbüchsen sind seit langem bekannt (siehe z. B. US-A 2 617 401 und 2 721 542). Sie sollen die Kosten für das nach längerer Betriebszeit erforderliche Nacharbeiten der Kolben und der Zylinderbohrungen reduzieren. Außerdem bieten die Zylinderlaufbüchsen eine zusätzliche Abdichtung zwischen Zylinderkopf und Zylinderblock und verhindern so zumindest teilweise das unerwünschte Abströmen der Verbrennungsgase aus dem Verbrennungsraum in andere Hohlräume der Maschine. Bei den vorbekannten Ausführungsformen liegt die obere Stirnfläche der Zylinderlaufbüchsen meist bündig in der Trennfuge zwischen Zylinderkopf und Zylinderblock und wird von der Zylinderkopfdichtung mit beaufschlagt.

Mit fortschreitender Technologie wurde auch der Verbrennungsdruck in den Brennkraftmaschinen erhöht; Verbrennungskraftmaschinen, die mit Verbrennungsdrücken in einem Bereich von 10 000 bis 20 000 Kilo Pascals arbeiten, sind heute nicht ungewöhnlich. Diese höheren Verbrennungsdrücke haben sich nachteilig auf die Abdichtungen der Maschine ausgewirkt, und sie verringern auch die von den üblichen Zylinderlaufbüchsen bewirkte Abdichtung gegenüber Verbrennungsgasen. Derartige Verbrennungsgas-Undichtigkeiten sind für die Verbrennungskraftmaschine von großem Nachteil, denn sie beeinträchtigen die Arbeitsleistung, führen zu Startschwierigkeiten, verringern die Kompression und beeinträchtigen die Wärmeabführeigenschaft des Kühlmittels.

Der Erfindung liegt die Aufgabe zugrunde, die eingangs erläuterte Zylinderlaufbüchse so zu verbessern, daß sie auch bei hohen Verbrennungsdrücken ihre Abdichteigenschaft nicht verliert.

Diese Aufgabe wird gemäß der Erfindung dadurch gelöst, daß die Hülse an ihrem einen Ende mit einem ringförmigen Wandungsabschnitt dünner Wandstärke versehen ist, dessen äußere Mantelfläche eine wulstförmige, im Querschnitt konvexe Dichtfläche bildet, die zur Bildung eines Preßsitzes in einer Ausnehmung eines Zylinderkopfes nach innen biegbar ist.

Wird ein mit einer entsprechenden Ausnehmung versehener Zylinderkopf auf den Zylinderblock aufgesetzt, so biegt die zylindrische Innenfläche der genannten Ausnehmung den dünnen Wandungsabschnitt etwas nach innen. Man erhält zwischen dem dünnen Wandungsabschnitt der Zylinderlaufbüchse und der zylindrischen Innenfläche der Ausnehmung des Zylinderkopfes einen Preßsitz, der einen unerwünschten Gasaustritt aus der Verbrennungskammer auch bei hohen Verbrennungsdrücken sicherstellt. Die neue Zylinderlaufbüchse führt zu einer Verringerung der zur Verbindung des Zylinderkopfes mit dem Zylinderblock benötigten Kräfte. Die neue Zylinderlaufbüchse eignet sich insbesondere für Hochdruck-Dieselmotoren, wo die Unterbindung von Gasundichtigkeiten von besonderer Bedeutung ist.

Der genannte dünne Wandungsabschnitt der Zylinderlaufbüchse ist erfindungsgemäß zweckmäßig federnd ausgebildet.

Bei einer Brennkraftmaschine mit einem Zylinderblock, auf dem ein Zylinderkopf montiert ist, der das eine Ende einer im Zylinderblock angeordneten Zylinderlaufbüchse gemäß der Erfindung verschließt, ist es vorteilhaft, wenn die Dichtfläche der Zylinderlaufbüchse über den Zylinderblock hinausragt und mit der zylindrischen Innenfläche einer kreisrunden taschenförmigen Ausnehmung im Zylinderkopf einen Preßsitz bildet.

Bei dieser erfindungsgemäßen Ausbildung wird der dünne ringförmige Wandungsabschnitt der Zylinderlaufbüchse durch den Verbrennungsdruck selbsttätig in eine Abdichtstellung gegen die zylindrische Innenfläche des Zylinderkopfes gedrückt.

Entgegen den vorbekannten Ausführungsformen ist es erfindungsgemäß vorteilhaft, wenn zwischen der taschenförmigen Ausnehmung des Zylinderkopfes und der Stirnfläche des dünnen Wandungsabschnitts der Zylinderlaufbüchse ein lichter Abstand besteht. Würde der Zylinderkopf die Stirnfläche der Zylinderlaufbüchse berühren, bestände die Gefahr, daß bei der Montage und/oder bei Wärmeausdehnung der Zylinderlaufbüchse deren Stirnfläche pilz förmig umgebördelt wird, wodurch die Hin- und Herbewegung des Kolbens beeinträchtigt würde. Außerdem könnte eine derartige Verformung die Zylinderlaufbüchse auch unrund machen, wodurch Kolben und Kolbenringe beeinträchtigt würden.

Weitere Merkmale und Vorteile der Erfindung sind Gegenstand der Unteransprüche.

In der Zeichnung ist eine als Beispiel dienende Ausführungsform der Erfindung dargestellt. Es zeigen:

Figur 1 einen Längsschnitt durch eine in einer Brennkraftmaschine montierte Zylinderlaufbüchse und

Figur 2 in verkleinertem Maßstab in perspektivischer Darstellung die Zylinderlaufbüchse gemäß Figur 1.

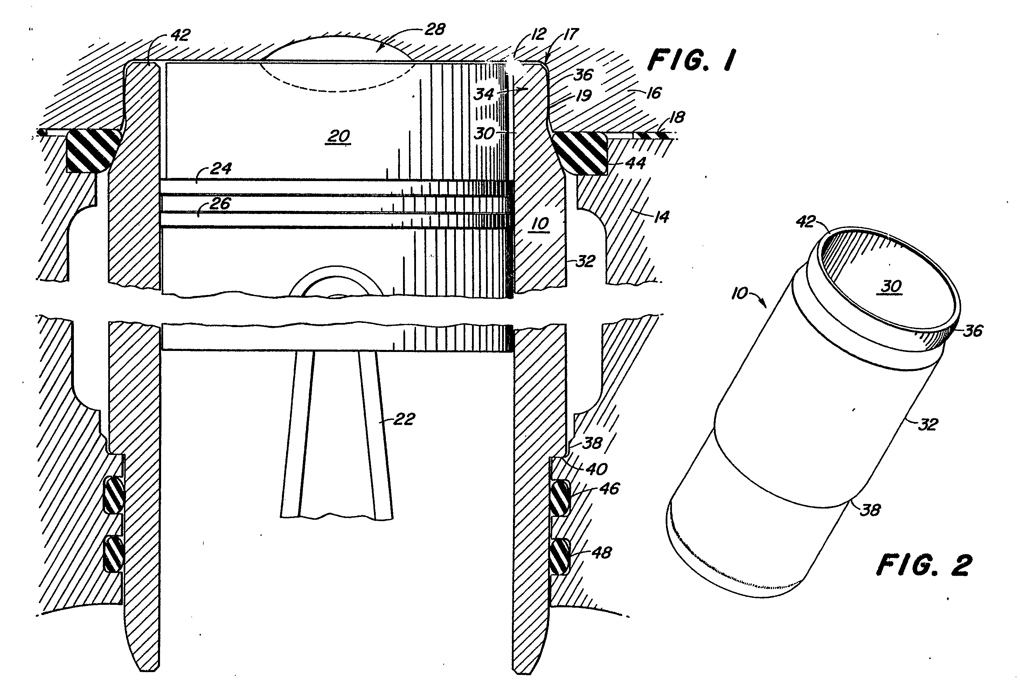

Figur 1 zeigt eine Zylinderlaufbüchse 10, die in dem Zylinderblock 14 einer Brennkraftmaschine angeordnet ist. Letztere kann eine Benzin- oder Dieselmaschine sein und weist üblicherweise den Zylinderblock 14, einen Zylinderkopf 16, eine Zylinderkopfdichtung 18 und einen Kolben 20 auf. Der Zylinderkopf 16 ist auf dem Zylinderblock 14 mit mehreren in der Zeichnung nicht dargestellten Zylinderkopfschrauben befestigt und schließt dabei das in der Zeichnung obere Ende der Zylinderbohrung 12 ab. Der Zylinderkopf 16 weist eine kreisrunde taschenförmige Ausnehmung 17 mit einer zylindrischen Innenfläche 19 auf, in die das in der Zeichnung obere Ende der Zylinderlaufbüchse 10 ragt.

Der in der Zylinderbohrung 12 hin und her gehende Kolben 20 wird in üblicher Weise über eine Kurbelstange 22 von einer nicht dargestellten Kurbelwelle angetrieben. Außerdem weist der Kolben 20 übliche Kolbenringe auf, von denen zwei mit dem Bezugszeichen 24 und 26 gekennzeichnet sind, die in gleitender Anlage an der Innenwandung 30 der Zylinderlaufbüchse 10 anliegen.

Die trockene oder nasse Zylinderlaufbüchse 10 besteht aus einer länglichen, an beiden Enden offenen zylindrischen Hülse, die eine glatte Innenwandung 30 mit überall angenähert gleichem Durchmesser sowie eine profilierte äußere Mantelfläche 32 aufweist. Soweit nachfolgend von « oben » oder « unten » gesprochen wird, dient dies lediglich zur Erläuterung der Zeichnung und stellt keine Einschränkung der Erfindung dar.

Die Zylinderlaufbüchse 10 ist an ihrem oberen Ende mit einem ringförmigen Wandungsabschnitt 34 dünner Wandstärke versehen, dessen äußere Mantelfläche eine wulstförmige, im Querschnitt konvexe Dichtfläche 36 bildet, die im Querschnitt kreisbogenförmig oder nur bogenförmig ausgebildet sein kann. Um eine gute Abdichtung zu erzielen, wird eine gebogene oder geometrische Kreisbogenform bevorzugt. Der genannte dünne Wandungsabschnitt 34 ist innerhalb seiner elastischen Grenzen vorzugsweise federnd ausgebildet und wird bei der Montage des Zylinderkopfes 16 auf den Zylinderblock 14 etwas nach innen gebogen. Bei der Montage wird die zylindrische Innenfläche 19 der taschenförmigen Ausnehmung 17 des Zylinderkopfes 16 nach unten über den dünnen Wandungsabschnitt 34 der Zylinderlaufbüchse 10 gedrückt, so daß die Dichtfläche 36 der Zylinderlaufbüchse mit der zylindrischen Innenfläche 19 des Zylinderkopfes einen Preßsitz bildet.

Die Zylinderlaufbüchse 10 wird fest im Zylinderblock 14 angeordnet und liegt in Axialrichtung mit einer Schulter 38 auf einem ringförmigen Sitz 40 des Zylinderblocks 14 an. Die Schulter 38 sitzt an der äußeren Mantelfläche 32 der Zylinderlaufbüchse 10. In der in Figur 1 dargestellten montierten Position der Zylinderlaufbüchse überragt der dünne ringförmige Wandungsabschnitt 34 die Oberfläche des Zylinderblocks 14. Ferner läßt Figur 1 erkennen, daß der Zylinderkopf 16 in seiner montierten Stellung die Stirnfläche 42 der Zylinderlaufbüchse 10 nicht berührt.

Zusätzlich zur Zylinderlaufbüchse ist noch eine in Form eines Ringes aus elastischem Polymer ausgebildete Dichtung 44 vorgesehen, die zwischen dem Zylinderblock 14 und dem Zylinderkopf 16 liegt und außerdem an der äußeren Mantelfläche 32 der Zylinderlaufbüchse 10 unmittelbar unterhalb von derem dünnen Wandungsabschnitt 34 anliegt. Diese Dichtung 44 verhindert zusätzlich einen Austritt der Verbrennungsgase, die ggf. an der Dichtfläche 36 der Zylinderlaufbüchse 10 vorbeiströmen. Die Dichtung 44 kann aus temperaturbeständigem elastischen oder gummiähnlichem Material bestehen. Derartige Dichtungen können vorgefertigt oder bei Raumtemperatur vulkanisierte Zylinderkopfdichtungen sein, wie sie z. B. von den Firmen Dow Corning oder General Electric verkauft werden.

Sowohl die Zylinderlaufbüchse 10 als auch der Zylinderkopf 16 weisen abgerundete Kanten auf, um das Aufdrücken des Zylinderkopfes auf die Zylinderlaufbüchse zu erleichtern. Weitere Abwandlungen oder zusätzliche Merkmale, wie z. B. O-Dichtringe 46 und 48, die im unteren Bereich gegen die äußere Mantelfläche 32 der Zylinderlaufbüchse 10 anliegen, können wahlweise vorgenommen bzw. vorgesehen werden.

Beispiel : Für einen Dieselmotor von Standardgröße, einem Verbrennungsspitzendruck zwischen 3 500 und 21 000 Kilo Pascals, einer Zündtemperatur zwischen 816 und 1 371 °C (1 500 bis 2 500° Fahrenheit) und einer Zylinderbohrung von etwa 130 mm kann eine Zylinderlaufbüchse mit folgenden Abmessungen verwendet werden : Die Wandstärke beträgt etwa 7 bis 10 mm, wobei der dünne Wandungsabschnitt 34 ein oder zwei Millimeter dünner ausgebildet ist. Der Preßsitz zwischen Zylinderkopf 16 und dem dünnen Wandungsabschnitt 34 liegt zwischen 0,05 und 0,25 mm, vorzugsweise bei 0,1 bis 0,2 mm. Länge und Durchmesser der Zylinderlaufbüchse hängen vom Kolbenhub und -durchmesser ab. Die wulstförmige, im Querschnitt konvexe Dichtfläche 36 kann ungefähr 1 bis 2 mm breit sein und sollte etwa 5 mm unterhalb der oberen Stirnfläche 42 der Zylinderlaufbüchse liegen.

## Ansprüche

1. Zylinderlaufbüchse (10), bestehend aus einer länglichen, an beiden Enden offenen zylindrischen Hülse, die eine glatte Innenwandung (30) mit überall angenähert gleichem Durchmesser sowie eine profilierte äußere Mantelfläche (32) aufweist, dadurch gekennzeichnet, daß die Hülse an ihrem einen Ende mit einem ringförmigen Wandungsabschnitt (34) dünner Wandstärke versehen ist, dessen äußere Mantelfläche eine wulstförmige, im Querschnitt konvexe Dichtfläche (36) bildet, die zur Bildung eines Preßsitzes in einer Ausnehmung (17) eines Zylinderkopfes (16) nach innen biegbar ist.

2. Zylinderlaufbüchse nach Anspruch 1, dadurch gekennzeichnet, daß der genannte dünne Wandungsabschnitt (34) federnd ausgebildet ist.

3. Zylinderlaufbüchse nach Anspruch 1 oder 2, dadurch gekennzeichnet, daß die Dichtfläche (36) des dünnen Wandungsabschnitts (34) im Querschnitt kreisbogenförmig ausgebildet ist.

Aufgrund vorstehender Erläuterungen sowie der zeichnerischen Darstellungen vermag ein Durchschnittsfachmann ohne weiteres zahlreiche Abwandlungen, Modifikationen und dergleichen zu erkennen, die alle unter den Schutzumfang der Anmeldung fallen sollen.

4. Brennkraftmaschine mit einem Zylinderblock (14), auf dem ein Zylinderkopf (16) montiert ist, der das eine Ende einer im Zylinderblock (14) angeordneten Zylinderlaufbüchse (10) verschließt, die nach einem der Ansprüche 1 bis 3 ausgebildet ist, dadurch gekennzeichnet, daß die Dichtfläche (36) der Zylinderlaufbüchse (10) über den Zylinderblock (14) hinausragt und mit der zylindrischen Innenfläche (19) einer kreisrunden taschenförmigen Ausnehmung (17) im Zylinderkopf (16) einen Preßsitz bildet.

5. Brennkraftmaschine nach Anspruch 4, dadurch gekennzeichnet, daß der dünne ringförmige Wandungsabschnitt (34) der Zylinderlaufbüchse (10) durch den inneren Verbrennungsdruck selbsttätig in eine Abdichtstellung gegen die zylindrische Innenfläche (19) des Zylinderkopfes (16) gedrückt wird.

6. Brennkraftmaschine nach Anspruch 4 oder 5, dadurch gekennzeichnet, daß zwischen der taschenförmigen Ausnehmung (17) des Zylinderkopfes (16) und der Stirnfläche (42) des dünnen Wandungsabschnitts (34) der Zylinderlaufbüchse (10) ein lichter Abstand besteht.

7. Brennkraftmaschine nach Anspruch 4, 5 oder 6 mit einer Zylinderkopfdichtung (44), dadurch gekennzeichnet, daß die Zylinderkopfdichtung (44) neben dem dünnen ringförmigen Wandungsabschnitt (34) an der äußeren Mantelfläche (32) der Zylinderlaufbüchse (10) anliegt und zusammen mit deren dünnem Wandungsabschnitt (34) den Durchtritt von Verbrennungsgasen verhindert.

8. Brennkraftmaschine nach Anspruch 7, dadurch gekennzeichnet, daß die Zylinderkopfdichtung (44) ein Ring aus elastischem Polymer ist.

## Claims

1. A cylinder liner (10) comprising an elongate cylindrical sleeve which is open at both ends and which has a smooth internal wall surface (30) of approximately the same diameter throughout, and a profiled external peripheral surface (32), characterised in that, at one end thereof, the sleeve is provided with an annular wall portion (34) of thin wall thickness, the external peripheral surface of which forms a bead-shaped sealing surface (36) which is of convex cross-section and which is bendable inwardly to form a press fit in a recess (17) in a cylinder head (16).

2. A cylinder liner according to claim 1 characterised in that said thin wall portion (34) is of a resilient nature.

3. A cylinder liner according to claim 1 or claim 2 characterised in that the sealing surface (36) of the thin wall portion (34) is in the form of a circular arc in cross-section.

4. An internal combustion engine comprising a cylinder block (14) on which a cylinder head (16) is mounted, the cylinder head closing one end of a cylinder liner (10) which is disposed in the cylinder block (14) and which is constructed in accordance with one of claims 1 to 3, characterised in that the sealing surface (36) of the cylinder liner (10) projects beyond the cylinder block (14) and forms a press fit with the cylindrical inside surface (19) of a circular pocket-like recess (17) in the cylinder head (16).

5. An internal combustion engine according to claim 4 characterised in that the thin annular wall portion (34) of the cylinder liner (10) is automatically pressed by the internal combustion pressure into a sealing position against the cylindrical inside surface (19) of the cylinder head (16).

6. An internal combustion engine according to claim 4 or claim 5 characterised in that there is a clear distance between the pocket-like recess (17) in the cylinder head (16) and the end surface (42) of the thin wall portion (34) of the cylinder liner (10).

7. An internal combustion engine according to claim 4, claim 5 or claim 6 with a cylinder head gasket (44), characterised in that, beside the thin annular wall portion (34), the cylinder head gasket (44) bears against the external peripheral surface (32) of the cylinder liner (10) and, together with the thin wall portion (34) thereof, prevents combustion gases from passing.

8. An internal combustion engine according to claim 7 characterised in that the cylinder head gasket (44) is a ring of elastic polymer.

## Revendications

1. Chemise (10) pour cylindre, constituée par un manchon cylindrique allongé ouvert à ses deux extrémités, présentant une paroi intérieure lisse (30) ayant partout sensiblement le même diamètre, ainsi qu'une surface périphérique extérieure (32) profilée, caractérisée en ce que le manchon est muni à l'une de ses extrémités d'un tronçon de paroi annulaire (34) ayant une faible épaisseur de paroi, dont la surface périphérique extérieure constitue une surface d'étanchéité (36) en forme de bourrelet de section droite convexe, qui peut s'infléchir vers l'intérieur pour fournir un emmanchement à force dans une cavité (17) d'une culasse (16).

2. Chemise pour cylindre suivant la revendication 1, caractérisée en ce que le mince tronçon de paroi mentionné (34) est agencé de façon à être élastique.

3. Chemise pour cylindre suivant la revendication 1 ou 2, caractérisée en ce que la surface d'étanchéité (36) du mince tronçon de paroi (34) a en section droite une forme en arc de cercle.

4. Moteur à combustion interne comportant un bloc-cylindres (14) sur lequel une culasse (16) est adaptée, cette culasse obturant l'une des extrémités d'une chemise de cylindre (10) logée dans le bloc-cylindres (14), cette chemise étant agencée suivant l'une quelconque des revendications 1 à 3, caractérisé en ce que la surface d'étanchéité (36) de la chemise de cylindre (10) fait saillie au-delà du bloc-cylindres (14) et réalise avec la surface intérieure cylindrique (19) d'une cavité circulaire en forme d'alvéole (17) ménagée dans la culasse (16) un emmanchement à force.

5. Moteur à combustion interne suivant la revendication 4, caractérisé en ce que le mince tronçon de paroi annulaire (34) de la chemise de cylindre (10) est repoussé automatiquement par la pression de combustion interne dans une position d'étanchéité contre la surface intérieure cylindrique (19) de la culasse (16).

6. Moteur à combustion interne suivant la revendication 4 ou 5, caractérisé en ce qu'un intervalle demeure présent entre la cavité en forme d'alvéole (17) de la culasse (16) et la surface terminale (42) du mince tronçon de paroi (34) de la chemise de cylindre (10).

7. Moteur à combustion interne suivant la revendication 4, 5 ou 6, comportant un joint de culasse (44), caractérisé en ce que le joint de culasse (44) s'applique contre la surface périphérique extérieure (32) de la chemise de cylindre (10) au voisinage du mince tronçon de paroi (34) et empêche, en combinaison avec ce mince tronçon de paroi (34), le passage des gaz de combustion.

8. Moteur à combustion interne suivant la revendication 7, caractérisé en ce que le joint de culasse (44) est formé par une bague en polymère élastique.

FIG. 1

FIG. 2

0 038 057